# EUROPÄISCHE PATENTSCHRIFT

(11) **EP 2 188 646 B1**
(45) Veröffentlichungstag und Bekanntmachung des Hinweises auf die Patenterteilung: **31.08.2011**
(21) Anmeldenummer: 08773914.0
(22) Anmeldetag: 08.07.2008
(51) Int. Cl.: G01S 7/52, G01S 7/527, G01S 7/529, G01S 15/93

(54) **VERFAHREN UND ANORDNUNG ZUR AUSWERTUNG VON ULTRASCHALLSIGNALEN**
METHOD AND ARRANGEMENT FOR EVALUATING ULTRASONIC SIGNALS
PROCÉDÉ ET SYSTÈME POUR L'ÉVALUATION DE SIGNAUX ULTRASONORES

(30) Priorität: 12.09.2007 DE 102007043501
(43) Veröffentlichungstag der Anmeldung: 26.05.2010
(73) Patentinhaber: Valeo Schalter und Sensoren GmbH, 74321 Bietigheim-Bissingen (DE)
(72) Erfinder: GOTZIG, Heinrich, 74081 Heilbronn (DE); LILL, Anton, 74348 Lauffen a. N. (DE); HEIMBERGER, Markus, 71732 Tamm (DE)
(86) Internationale Anmeldenummer: PCT/EP2008/005546
(87) Internationale Veröffentlichungsnummer: WO 2009/036825

(56) Entgegenhaltungen:
- EP-A- 1 562 050
- WO-A-2007/065779
- DD-A1- 266 857
- DD-A5- 289 346

## Beschreibung

### Stand der Technik

Die Erfindung betrifft ein Verfahren und eine Anordnung zur Auswertung von Ultraschallsignalen, vorzugsweise zur Störsignalerkennung bei Umfelderkennungssystemen für Fahrzeuge, nach der Gattung des Haupt- und der Nebenansprüche.

Bei bisher üblichen ultraschallbasierenden Umfelderkennungssystemen, zum Beispiel für Einparkhilfen für Fahrzeuge, werden mindestens ein Ultraschallsensor oder mehrere vorzugsweise beispielsweise in der vorderen und/oder hinteren Stoßstange eines Kraftfahrzeuges verbaut. Jeder Ultraschallsensor sendet dabei ein Ultraschallsignal aus, welches von einem möglichen Hindernis reflektiert wird und von dem gleichen Ultraschallsensor und oder von weiteren Ultraschallsensoren empfangen werden kann.

Das gesendete Ultraschallsignal ist dabei zeitlich begrenzt, so dass nach einer endlichen Zeit der Sendevorgang abgeschlossen ist und das Sendesignal somit eine feste definierte Impulslänge aufweist. Nach der Reflexion dieses Signals an einem zu erkennenden Hindernis ist die Impulslänge immer noch gleich groß und steht dem als Sender und Empfänger dienenden Ultraschallsensor oder weiteren Sensoren als Empfangssignal zur Auswertung zur Verfügung.

Aus der DD 289 346 A5 ist ein Verfahren zur Unterdrückung von Störsignalen bei der Auswertung von solchen in einem Objekterkennungssystem empfangenen Ultraschallsignalen bekannt, bei dem die Impulslängen der empfangenen Signale digital ausgewertet werden. Es wird hier ein Vergleich der Impulslängen des Sendesignals und des Empfangssignals durchgeführt und aus den Abweichungen werden Störsignale ermittelt und anschließend unterdrückt. Die Störsignale werden dabei von externen Störquellen erzeugt und weisen eine vom Sendesignal abweichende Längen- und Amplitudencharakteristik auf.

### Darstellung der Erfindung

Die Erfindung geht von einem Verfahren zur Auswertung von Ultraschallsignalen mit einem Sender und einem Empfänger aus, wobei die Impulscharakteristik des empfangenen Ultraschallsignals hinsichtlich der Erkennung von Störsignalen ausgewertet wird. Erfindungsgemäß wird in vorteilhafter Weise in einem vorgegebenen Zeitraum einer Störsignalanalyse im Empfänger die Empfangsempfindlichkeit derart verändert, dass sich aus der daraus ergebenden Änderung der Impulslänge des empfangenen Signals eine Zuordnung zur bekannten Impulscharakteristik des gesendeten Ultraschallsignals oder zu einem Störsignal ergibt. Ein solches Verfahren kann beispielsweise in einem Abstands- oder Umfelderkennungssystems für ein Parkassistenzsystem bei einem Fahrzeug angewendet werden.

Die Änderung der Empfangsempfindlichkeit kann auf einfache Weise mittels eines über der Zeit veränderlichen Komparatorschwellwertes vorgenommen werden, wobei eine über dem jeweiligen Komparatorschwellwert liegende Amplitude des empfangenen Ultraschallsignals ein gültiges Komparatorsignal und eine unter dem jeweiligen Komparatorschwellwert liegende Amplitude des empfangenen Ultraschallsignals ein ungültiges Komparatorsignal weiterverarbeitet wird. Hierbei kann davon ausgegangen werden, dass das Störsignal eine wesentlich größere Amplitude mit entsprechen steileren An- und Abstiegsflanken als das gesendete Ultraschallsignal aufweist.

Somit kann auf einfache Weise eine Plausibilisierung darüber, ob Störsignale vorhanden sind oder nicht, über die vorgeschlagene Variation der Empfangsempfindlichkeit erfolgen, z.B. über die Änderung der Empfangsschwellwerte innerhalb des Ultraschallempfängers. Die Impulslänge eines empfangenen Nutzsignals ist in der Regel proportional zur Empfangsempfindlichkeit, d.h. zum Zeitpunkt der Störsignalanalyse wird der Ultraschallempfänger unempfindlicher (höherer Schwellwert) gemacht und damit würde sich die Impulslänge aufgrund des quasi sinusförmigen An- und Abstiegsverhaltens entsprechend verringern. Die Impulslänge eines Störsignals mit relativ großer Amplitude und quasi rechteckförmigen Verlauf ist hingegen konstant und ändert sich nicht bei einer Änderung der Eingangsempfimndlichkeit des Ultraschallempfängers.

Weiterhin ist es auch vorteilhaft, wenn zusätzlich, wie es für sich gesehen im Prinzip aus dem eingangs erwähnten Stand der Technik bekannt ist, eine Bestimmung der Impulslänge des empfangenen Ultraschallsignals und ein Vergleich mit der Impulslänge des gesendeten Ultraschallsignals vorgenommen wird und sich daraus eine Zuordnung zur bekannten Impulslänge des gesendeten Ultraschallsignals oder zu einem Störsignal ergibt.

Zur Bestimmung der empfangenen Impulslänge gibt es relativ einfache Methoden, wie beispielsweise eine Zählung der einzelnen Nulldurchgänge des empfangenen Ultraschallimpulses. Ist die empfangene Impulslänge kleiner als die gesendete Impulslänge handelt es sich um ein korrekt empfangenes Signal. Ist hingegen die empfangene Impulslänge größer, so kann auf eine gestörte Umgebung zurückgeschlossen werden.

Eine erfindungsgemäße Anordnung zur Ausführung des zuvor beschriebenen Verfahrens kann mit mindestens einem Ultraschallsender und mindestens einem Ultraschallempfänger ausgerüstet sein, die in einem vorgegebenen Abstand zu einem zu erfassenden Objekt angeordnet sind. Sowohl der jeweilige Ultraschallsender und der jeweilige Ultraschallempfänger kann mit einer elektronischen Schaltung verbunden sein, mit der dann, wie zuvor beschrieben, aus der Änderung der Impulslänge des empfangenen Signals eine Zuordnung zur bekannten Impulscharakteristik des gesendeten Ultraschallsignals oder zu einem Störsignal ermittelbar ist. Der Ultraschallsender und der Ultraschallempfänger können dabei auf einfache Weise gemeinsam einen einstückigen Ultraschallsensor bilden.

Weiterhin ist es möglich, dass die elektronischen Schaltung im wesentlichen aus diskreten Komparatoren und einer nachgeschalteten Auswerteeinheit aufgebaut ist oder auch, dass die Komparatoren und die nachgeschaltete Auswerteeinheit Bestandteile eines programmierbaren Mikrorechnerbausteins sind. Mit einem für diesen Mikrorechnerbaustein ausgestalteten Softwaremodul kann ein Störsignalanalyseprogrammmodul realisiert werden, mit dem dann entsprechen dem zuvor erwähnten Verfahren aus der Änderung der Impulslänge des empfangenen Signals eine Zuordnung zur bekannten Impulscharakteristik des gesendeten Ultraschallsignals oder zu einem Störsignal errechenbar ist.

Die Bestimmung der Impulslänge und auch die Auswertung, ob es sich um ein Störsignal oder um ein Nutzsignal handelt, kann somit in vorteilhafter Weise bereits im Ultraschallsensor vorgenommen werden. Es ist aber auch möglich, dass die Kontroll- oder Auswerteeinheit der Ultraschallsensoren dies übernimmt, die dann auch die Auswertung, ob es sich um ein Störsignal oder um ein Nutzsignal handelt, vornimmt.

Der Vorteil des erfindungsgemäßen Verfahrens ist, dass während eines Sende -und Empfangszykluses bereits auf eine gestörte Umgebung, d.h. auf ein Störsignal, zurückgeschlossen werden kann und damit in Echtzeit eine Aussage getroffen werden kann, ob das empfangen Signal gestört ist, wobei insbesondere auch sehr einfach und ohne großen Aufwand auf ein sonst eventuell notwendiges codiertes Sendesignal verzichtet werden kann.

### Kurze Beschreibung der Zeichnung

Ein Ausführungsbeispiel der Erfindung wird anhand der Figuren der Zeichnung erläutert. Es zeigen:
Figur 1 ein Blockschaltbild einer Umfelderkennungsanordnung mit einem Ultraschallsensor und einer Auswertung von Ultraschallsignalen und
Figur 2 ein Diagramm der Amplitude des Ultraschallsignals mit einer digitalen Auswertung.

### Wege zur Ausführung der Erfindung

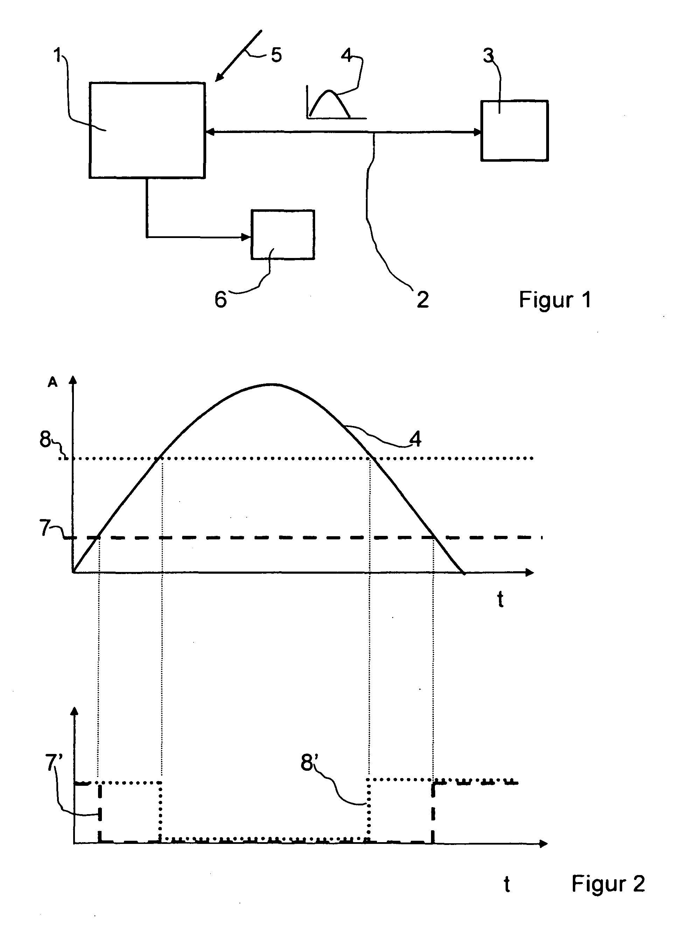

Aus Figur 1 ist eine Anordnung mit einem Ultraschallsensor 1 zu entnehmen, bei der im Ultraschallsensor 1 ein Sender und ein Empfänger vorhanden ist. Die ausgesendeten Ultraschallsignale gemäß Pfeil 2 werden von einem Objekt 3 reflektiert und das reflektierte Echo (Pfeil 2) wird über den Empfänger des Ultraschallsensor 1 ausgewertet. Die Impulscharakteristik des empfangenen Ultraschallsignals (4) ist anhand des schematischen Verlaufs nach der Figur 1 als quasi sinusförmig über eine vorgegebene Zeitspanne dargestellt. Die Zeitspanne und die Impulscharakteristik des vom Ultraschallsensor 1 ausgesendeten Ultraschallsignals und des vom Objekt 3 reflektierten empfangen Ultraschallsignals 4 ist hier im wesentlichen übereinstimmend. Eine Auswertung des empfangenen Ultraschallsignals 4 und des Störsignals 5 erfolgt in einer Auswerteeinrichtung 6.

Schematisch ist in der Figur-1 noch ein Störsignal 5 angedeutet, dass von einer hier nicht näher erläuterten störenden Schallquelle ausgesendet wird. Die Zeitspanne und die Impulscharakteristik dieses Störsignals 5 weicht dagegen von dem vom Ultraschallsensor 1 ausgesendeten Ultraschallsignal mit hoher Wahrscheinlichkeit ab.

Zum einen kann nunmehr mit einer für sich gesehen im Prinzip aus dem eingangs erwähnten Stand der Technik bekannten Methode eine Bestimmung der

Impulslänge des empfangenen Ultraschallsignals 4 und ein Vergleich mit der Impulslänge des gesendeten Ultraschallsignals vorgenommen werden und es kann daraus bereits eine erste Zuordnung zur bekannten Impulslänge des vom Ultraschallsensor 1 ausgesendeten gesendeten Ultraschallsignals oder zu einem Störsignal 5 erfolgen.

Zum anderen kann erfindungsgemäß mit einem anhand Figur 2 erläuterten Verfahren ein Störsignal 5 noch genauer erkannt werden. Hier ist die Amplitude A des Ultraschallsignals 4 als Nutzsignal mit dem quasi sinusförmigen Verlauf über der Zeit t dargestellt. Es wird eine Empfindlichkeitseinstellung des Empfängers im Ultraschallsensor 1 mit einem ersten Schwellwert 7 vorgenommen, so dass hieraus ein digitaler Signalverlauf als Auswertesignal 7' resultiert. Mit einer Änderung der Empfindlichkeitseinstellung des Empfängers im Ultraschallsensor 1 zu einem zweiten Schwellwert 8 erfolgt hieraus ein digitaler Signalverlauf als Auswertesignal 8'. Eine Erhöhung des Schwellwertes von 7 auf 8 hat damit eine Verringerung der Impulslänge der digitalen Auswertesignale 7' auf 8' zur Folge.

Durch die Veränderung der Empfangsempfindlichkeit nach der Figur 2 im Ultraschallsensor 1 kann somit eine Zuordnung zur bekannten Impulscharakteristik nach dem Verlauf 4 erkannt und damit von dem Störsignal 5 unterschieden werden. Da davon ausgegangen werden kann, dass das Störsignal 5 eine wesentlich größere Amplitude mit entsprechen steileren An- und Abstiegsflanken als das vom Ultraschallsensor 1 gesendete und entsprechend vom Objekt 3 reflektierte Ultraschallsignal 4 aufweist, kann eine sichere Plausibilisierung darüber, ob Störsignale vorhanden sind oder nicht, erfolgen.

## Patentansprüche

1. Verfahren zur Auswertung von Ultraschallsignalen mit einem Sender und einem Empfänger, wobei die Impulslänge des empfangenen Ultraschallsignals (4) hinsichtlich der Erkennung von Störsignalen (5) ausgewertet wird, **dadurch gekennzeichnet, dass** in einem vorgegebenen Zeitraum einer Störsignalanalyse im Empfänger die Empfangsempfindlichkeit derart verändert wird, dass sich aus der daraus ergebenden Änderung der Impulslänge des empfangenen Signals eine Zuordnung zur bekannten Impulscharakteristik des gesendeten Ultraschallsignals oder zu einem Störsignal (5) ergibt.

2. Verfahren nach Anspruch 1, **dadurch gekennzeichnet, dass** die Änderung der Empfangsempfindlichkeit mittels einer über der Zeit veränderlichen Schwellwertes (7,8) eines Komparators vorgenommen wird, wobei eine über dem jeweiligen Schwellwert (7,8) liegende Amplitude (A) des empfangenen Ultraschallsignals (4) als gültiges Komparatorsignal und eine unter dem jeweiligen Komparatorschwellwert liegende Amplitude des empfangenen Ultraschallsignals (4) als ungültiges Komparatorsignal weiterverarbeitet wird.

3. Verfahren nach Anspruch 1 oder 2, **dadurch gekennzeichnet, dass** das Störsignal (5) eine wesentlich größere Amplitude mit entsprechend steileren An- und Abstiegsflanken als das gesendete Ultraschallsignal aufweist.

4. Verfahren nach einem der vorhergehenden Ansprüche, **dadurch gekennzeichnet, dass** zusätzlich eine Bestimmung der Impulslänge des empfangenen Ultraschallsignals (4) und ein Vergleich mit der Impulslänge des gesendeten Ultraschallsignals vorgenommen wird und sich daraus eine Zuordnung zur bekannten Impulslänge des gesendeten Ultraschallsignals oder zu einem Störsignal (5) ergibt.

5. Anordnung zur Ausführung des Verfahrens nach einem der vorhergehenden Ansprüche, **dadurch gekennzeichnet, dass** mindestens ein Sender und mindestens ein Empfänger vorhanden sind, die in einem vorgegebenen Abstand ein zu erfassenden Objekt (3) angeordnet sind und dass sowohl der jeweilige Sender und der jeweilige Empfänger mit einer elektronischen Auswerteschaltung (6) verbunden sind, mit der aus der Änderung der Impulslänge des empfangenen Ultraschallsignals (4) eine Zuordnung zur bekannten Impulscharakteristik des gesendeten Ultraschallsignals oder zu einem Störsignal (5) ermittelbar ist.

6. Anordnung nach Anspruch 5, **dadurch gekennzeichnet, dass** ein Ultraschallsender und ein Ultraschallempfänger gemeinsam einen einstückigen Ultraschallsensor (1) bilden.

7. Anordnung nach Anspruch 5 oder 6, **dadurch gekennzeichnet, dass** die elektronischen Auswerteschaltung (6) im wesentlichen aus diskreten Komparatoren und einer nachgeschalteten Auswerteeinheit aufgebaut ist.

8. Anordnung nach Anspruch 7, **dadurch gekennzeichnet, dass** die Komparatoren und die nachgeschaltete Auswerteeinheit Bestandteile eines programmierbaren Mikrorechnerbausteins sind.

9. Softwaremodul zur Programmierung einer Anordnung nach Anspruch 8, **dadurch gekennzeichnet, dass** ein Störsignalanalyseprogrammmodul vorhanden ist, mit dem aus der Änderung der Impulslänge des empfangenen Ultraschallsignals (4) eine Zuordnung zur bekannten Impulscharakteristik des gesendeten Ultraschallsignals oder zu einem Störsignal (5) errechenbar ist.

10. Verwendung eines Verfahrens, einer Anordnung oder eines Softwaremoduls nach einem der vorhergehenden Ansprüche, **dadurch gekennzeichnet, dass** der mindestens eine Sender und der mindestens eine Empfänger Bestandteil eines Abstands- oder Umfelderkennungssystems für ein Parkassistenzsystems bei einem Fahrzeug ist.

## Claims

1. Method for evaluating ultrasonic signals having a transmitter and a receiver, wherein the pulse length of the received ultrasonic signal (4) is evaluated with respect to the detection of interference signals (5), **characterized in that** the reception sensitivity is changed in a predefined time period of an interference signal analysis in the receiver in such a way that an assignment to the known pulse characteristic of the transmitted ultrasonic signal or to an interference signal (5) is obtained from the resulting change in the pulse length of the received signal.

2. Method according to Claim 1, **characterized in that** the change in the reception sensitivity is carried out by means of a threshold value (7, 8) of a comparator which is variable over time, wherein an amplitude (A) of the received ultrasonic signal (4) which is above the respective threshold value (7, 8) is further processed as a valid comparator signal, and an amplitude of the received ultrasonic signal (4) which is below the respective comparison threshold value is further processed as an invalid comparator signal.

3. Method according to Claim 1 or 2, **characterized in that** the interference signal (5) has a significantly larger amplitude with correspondingly steeper rising edges and falling edges than the transmitted ultrasonic signal.

4. Method according to one of the preceding claims, **characterized in that** in addition the pulse length of the received ultrasonic signal (4) is determined and a comparison with the pulse length of the transmitted ultrasonic signal is carried out, and an assignment to the known pulse length of the transmitted ultrasonic signal or to an interference signal (5) takes place on the basis thereof.

5. Arrangement for carrying out the method according to one of the preceding claims, **characterized in that** at least one transmitter and at least one receiver are present and are arranged at a predefined distance from an object (3) to be sensed, and **in that** both the respective transmitter and the respective receiver are connected to an electronic evaluation circuit (6) with which an assignment to the known pulse characteristic of the transmitted ultrasonic signal or to an interference signal (5) can be determined from the change in the pulse length of the received ultrasonic signal (4).

6. Arrangement according to Claim 5, **characterized in that** an ultrasonic transmitter and an ultrasonic receiver together form a single-piece ultrasonic sensor (1).

7. Arrangement according to Claim 5 or 6, **characterized in that** the electronic evaluation circuit (6) is constructed essentially from discrete comparators and an evaluation circuit which is arranged downstream.

8. Arrangement according to Claim 7, **characterized in that** the comparators and the downstream evaluation unit are components of a programmable microcomputer module.

9. Software module for programming an arrangement according to Claim 8, **characterized in that** an interference signal analysis program module is present with which an assignment to the known pulse characteristic of the transmitted ultrasonic signal or to an interference signal (5) can b e calculated from the change in the pulse length of the received ultrasonic signal (4).

10. Use of a method, an arrangement or of a software module according to one of the preceding claims, **characterized in that** the at least one transmitter and the at least one receiver are components of a distance or surroundings detection system for a parking assistant system in a vehicle.

## Revendications

1. Procédé pour l'analyse de signaux ultrasonores avec un émetteur et un récepteur, la longueur d'impulsion du signal ultrasonore (4) reçu étant analysée en ce qui concerne la détection de signaux parasites (5), **caractérisé en ce que** la sensibilité de réception est modifiée dans un laps de temps prédéfini d'une analyse de signal parasite dans le récepteur, de telle sorte qu'une attribution à la caractéristique d'impulsion connue du signal ultrasonore émis ou à un signal parasite (5) est obtenue à partir de la variation de la longueur d'impulsion du signal reçu en résultant.

2. Procédé selon la revendication 1, **caractérisé en ce que** la variation de la sensibilité de réception est effectuée au moyen d'une valeur seuil (7, 8), variable dans le temps, d'un comparateur, une amplitude (A) située au-dessus de la valeur seuil (7, 8) respective, du signal ultrasonore (4) reçu étant traitée ultérieurement en tant que signal de comparateur valide est une amplitude, située au-dessous de la valeur seuil de comparateur respective, du signal ultrasonore (4) reçu étant traitée ultérieurement comme signal de comparateur non valide.

3. Procédé selon la revendication 1 ou 2, **caractérisé en ce que** le signal parasite (5) présente une amplitude nettement supérieure avec des flancs montants et des flancs descendants en conséquence à pente plus raide que le signal ultrasonore émis.

4. Procédé selon l'une quelconque des revendications précédentes, **caractérisé en ce qu'**en supplément une détermination de la longueur d'impulsion du signal ultrasonore (4) reçu et une comparaison avec la longueur d'impulsion du signal ultrasonore émis sont effectuées, et il en résulte une attribution à la longueur d'impulsion connue du signal ultrasonore émis ou à un signal parasite (5).

5. Agencement pour la mise en oeuvre du procédé selon l'une quelconque des revendications précédentes, **caractérisé en ce qu'**au moins un émetteur et au moins un récepteur sont présents, lesquels sont disposés à une distance prédéfinie de l'objet (3) à enregistrer et **en ce qu'**aussi bien l'émetteur respectif que le récepteur respectif sont reliés à un circuit d'analyse électronique (6), avec lequel une attribution à la caractéristique d'impulsion connue du signal ultrasonore émis ou à un signal parasite (5) peut être déterminée à partir de la variation de la longueur d'impulsion du signal ultrasonore (4) reçu.

6. Agencement selon la revendication 5, **caractérisé en ce qu'**un émetteur d'ultrasons et un récepteur d'ultrasons forment ensemble un capteur d'ultrasons (1) d'une seule pièce.

7. Agencement selon la revendication 5 ou 6, **caractérisé en ce que** le circuit d'analyse électronique (6) est conçu pour l'essentiel à base de comparateurs discrets et d'une unité d'analyse montée en aval.

8. Agencement selon la revendication 7, **caractérisé en ce que** les comparateurs et l'unité d'analyse montée en aval sont des composants d'un module de micro-ordinateur programmable.

9. Module de logiciel pour la programmation d'un agencement selon la revendication 8, **caractérisé en ce qu'**un module de programme d'analyse de signal parasite est présent, avec lequel une attribution, à la caractéristique d'impulsion connue du signal ultrasonore émis ou à un signal parasite (5) peut être calculée à partir de la variation de la longueur d'impulsion du signal ultrasonore (4) reçu.

10. Utilisation d'un procédé, d'un agencement ou d'un module de logiciel selon l'une quelconque des revendications précédentes, **caractérisée en ce que** le au moins un émetteur et le au moins un récepteur sont des composants d'un système de reconnaissance d'espacement ou de reconnaissance d'environnement pour un système d'assistance au stationnement pour un véhicule.
